# EUROPEAN PATENT SPECIFICATION

(11) **EP 1 541 856 B1**
(45) Date of publication and mention of the grant of the patent: **28.11.2007**
(21) Application number: 03104654.3
(22) Date of filing: 11.12.2003
(51) Int. Cl.: F02M 35/12, F16L 55/033

(54) **Sound adsorber suitable for air-flow conduits**
Schalldämpfer für luftdurchströmte Kanäle
Amortisseur de bruit pour conduit d'écoulement d'air

(43) Date of publication of application: 15.06.2005
(73) Proprietor: Mann + Hummel GmbH, 71638 Ludwigsburg (DE)
(72) Inventor: Caldana, Michel, 1190, Bruxelles (BE); Nguyen, Phung, 1020, Bruxelles (BE)

(56) References cited:
- EP-A- 1 022 505
- WO-A-99/24708
- DE-A- 19 504 223
- FR-A- 2 814 778
- US-B1- 6 194 052

## Description

### State of Technology

The invention refers to a sound absorber suitable for an air-flow conduit, as it is, for example, available in the intake section of an internal combustion engine of vehicles according to the preamble to the principal claim.

It is already known from FR 2 814 778 A1 to integrate such a sound absorber in the intake section of an internal combustion engine of a vehicle, in order to absorb sound emission. According to this publication, the acoustic properties of said intake section can be varied positively by way of orifices that are integrated in zones of the suction pipe of the intake section.

In addition, the state of technology further discloses that - for those sound emissions especially interfering during the operation of an internal combustion engine - the dimensions of both the length and width of said orifices are applicable in a successful way.

EP 1 170 499 A1 also describes a sound absorber for absorbing such sound emission, wherein a number of suggestions is given with regard to the principle geometric shape and position of said orifices.

Despite these known approaches to reduce the sound emissions, which are already known per se, it is, however, often very important for individual applications to attenuate a very specific frequency range to a required extent so that the efficiency of the sound absorber will be optimized according to the conditions of the internal combustion engine and the vehicle. It is often very difficult to dimension the geometry and the position of the orifices that are required for each specific case, often leading to unforeseeable results.

### Definition of the Object

The object underlying the present invention is to develop a sound absorber of that kind mentioned previously in such a way that the absorption behavior of the sound absorber can be influenced optimally and in dependency upon the sound frequency.

### Advantages of the Invention

The invention is based on a sound absorber suitable for an air-flow conduit wherein the sound-bearing conduit is provided with orifices in specific areas, wherein the length of said orifices in flow direction and the width thereof are dimensioned according to a predetermined size. In an advantageous manner, the present invention allows to improve the specific absorption characteristics in that - based on a predetermined orifice area of the slit-like orifices - a ratio of the orifices' length to the width thereof is selected in dependency upon a specific frequency range of sound emission to be absorbed.

It is particularly advantageous that each of the slit-like orifices has an orifice area in the range of 320 mm², with a selected width ranging between 0.5 mm and 1.7 mm. Through this increasing ratio of length to width of the slit-like orifices according to this invention compared to the conventional orifice areas, it surprisingly could be managed to achieve a very good absorption behavior of the conduit at a frequency larger than 400 Hz.

### Drawings

Exemplified embodiments of the sound absorber according to the present invention are shown in the figures of the drawings, in which:
Fig. 1 shows a sectional illustration of a suction pipe suitable for the intake air of an internal combustion engine comprising slit-like orifices,
Fig. 2 shows a diagram of the frequency-dependent absorption in case of slit-like orifices being of different length/width ratios,
Fig. 3 shows a diagram of the frequency-dependent absorption in case of slit-like orifices having different orifice areas on the opposite ends of the flow conduit,
Fig. 4 shows an application of slit-like orifices provided in the curvature region of a suction pipe, and
Fig. 5 is an exemplified embodiment with a resonator chamber being formed by a closable flap arranged over the slit-like orifices.

### Description of the Exemplified Embodiments

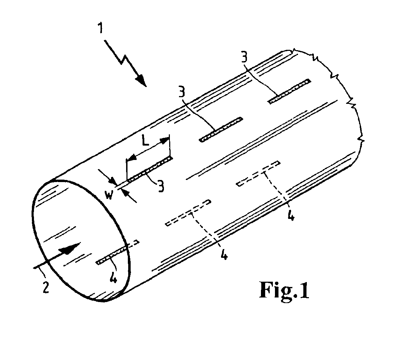

Figure 1 of the drawing which is not part of the invention shows a suction pipe 1 as an air flow conduit, for example, provided in the intake section for supplying the intake air 2 of an internal combustion engine which is not described herein in more detail. Said suction pipe 1 is provided with orifices 3 being integrated for absorbing the sound emission in order to be able to optimize those zones of the suction pipe 1 serving as sound absorber.

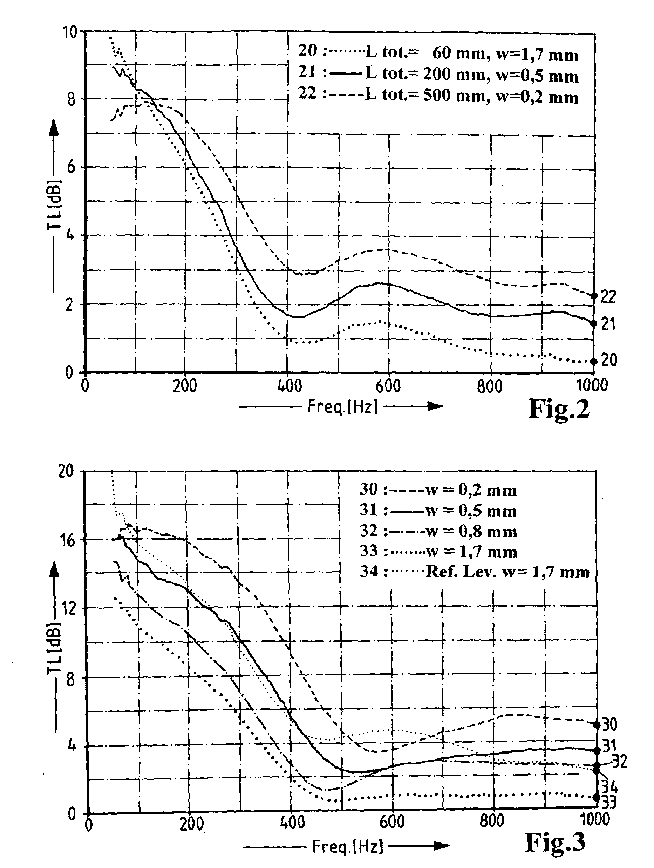

According to a first embodiment, the slit-like orifices 3 have a predetermined length L and/or an orifice area amounting, for example, to 320 mm², with the selected width W ranging between 0.5 mm and 1.7 mm. The respective absorption ratios for the different widths W are shown in Figure 2, wherein curve 20 generates a width W of 1.7 mm, curve 21 a width W of 0.5 mm, and curve 22 a width W of 0.2 mm.

As shown by the curves illustrated in Figure 2, by way of this exemplified embodiment and in providing a length/width ratios L/W for the slit-like orifices 2 in accordance with the invention, it is possible to achieve an increasing absorption behavior TL (dB) within the suction pipe 1 for a frequency larger than 400 Hz.

In addition, Figure 1 shows that the slit-like orifices 4 are likewise arranged which are located on the opposite ends of the suction pipe 1 and across the flow direction.

The curves 30 to 34 - as shown in Figure 3 - occur if the respective orifice areas of the slit-like orifices 3 and 4 provided on the opposite ends of the suction pipe 1 are unequal. The curves 30 to 31 indicate the frequency-dependent absorption behavior TL (dB), with the width W of the orifice areas ranging from 0.2 mm to 0.5 mm on both ends of suction pipe 1. The curves 32 to 33 indicates the frequency dependant adsorption behavior TL (dB) with the width W of 0.8mm and 1.7mm. The curve 34 indicates the reference level for a width W of 1.7mm. Especially for absorbing the sound emission below 500 Hz, said arrangement turns out to be favorable in which the individual areas of the orifices 3 provided on one end of the flow conduit amount to 100 mm² and the orifices 4 provided on the respective other end of the conduit amount to 50 mm².

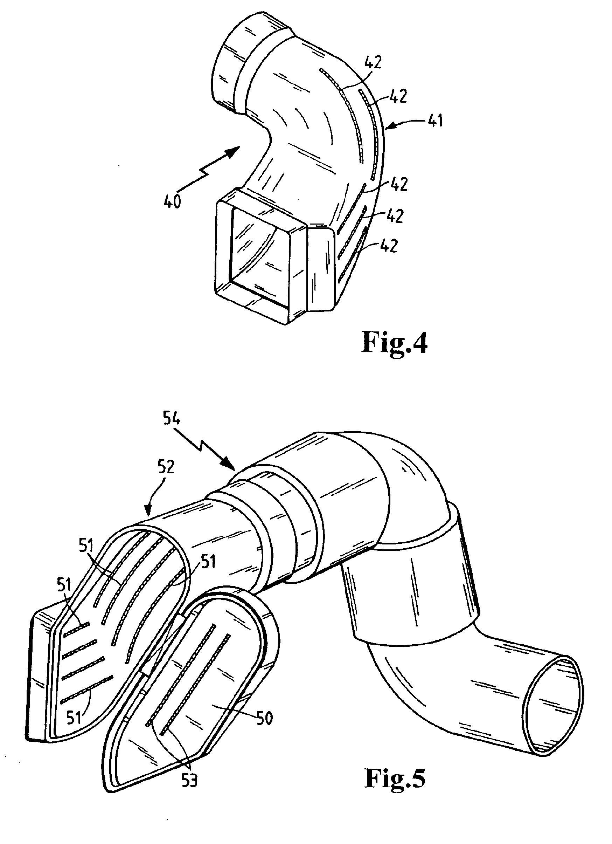

Figure 4 shows an example for a suction pipe 40, with slit-like orifices 42 being provided in the curvature region 41 which are dimensioned according to the examples as described previously.

Figure 5 shows an exemplified embodiment including a closable flap 50, which can be placed over the slit-like orifices 51 in the curvature region 52, thus forming a resonator chamber that even supports the sound-absorbing measures mentioned above. To further improve the sound absorption, the flap 50 is additionally provided with slits 53.

## Claims

1. Sound absorber comprising an air-flow conduit, wherein
- specific zones of the sound-bearing air-flow conduit are provided with slit-like orifices (42, 51), wherein the length thereof in flow direction and the width thereof are dimensioned according to a predetermined size,
- based on a predetermined orifice area of the slit-like orifices (42, 51), a ratio of the orifices' length (L) to the width (W) thereof is selected in dependency upon a specific frequency range of sound emission to be absorbed, **characterized in that,**
- the slit-like orifices (42) are provided in a suction pipe (40, 54) of an internal combustion engine serving as the sound-bearing conduit in the curvature region (41) and
- a closable flap (50) is provided on the suction pipe (54) of an internal combustion engine serving as the sound-bearing conduit, wherein said flap (50) can be placed over the slit-like orifices (51) provided in the curvature region (52).

2. Sound absorber according to patent claim 1, **characterized in that**
- each of the slit-like orifices (42, 51) has an orifice area amounting to 320 mm², and whereas the selected width thereof ranges between 0.5 mm and 1.7 mm.

3. Sound absorber according to patent claims 1 or 2, **characterized in that**
- the closable flap (50) is provided with slit-like orifices (53).

## Patentansprüche

1. Schalldämpfer beinhaltend eine Luftleitung, in dem
- spezifische Bereiche der schallführenden Luftleitung mit schlitzartigen Öffnungen (42, 51) versehen sind, wobei deren Länge in Strömungsrichtung und deren Breite gemäß einer vordefinierten Größe dimensioniert sind,
- basierend auf einem vordefinierten Öffnungsbereich der schlitzartigen Öffnungen (42, 51), das Verhältnis der Öffnungslänge (L) zur Breite (W) in Abhängigkeit eines spezifischen Frequenzbereiches einer zu absorbierenden Schallemission selektiert wird, **dadurch gekennzeichnet, dass**
- die schlitzartigen Öffnungen (42) in einem Saugrohr (40, 54) eines Verbrennungsmotors vorgesehen sind, das als schallführende Leitung in dem Krümmungsbereich (41) dient und
- eine verschließbare Klappe (50) am Saugrohr (54) eines Verbrennungsmotors vorgesehen ist, das als schallführende Leitung dient, wobei die Klappe (50) über die in dem Krümmungsbereich (52) vorgesehenen schlitzartigen Öffnungen (51) platziert werden kann.

2. Schalldämpfer gemäß Patentanspruch 1, **dadurch gekennzeichnet, dass**
- jede der schlitzartigen Öffnungen (42, 51) einen Öffnungsbereich von 320 mm² hat und wobei deren selektierte Breite sich zwischen 0,5 mm und 1,7 mm erstreckt.

3. Schalldämpfer gemäß Patentanspruch 1 oder 2, **dadurch gekennzeichnet, dass**
- die verschließbare Klappe (50) mit schlitzartigen Öffnungen (53) versehen ist.

## Revendications

1. Amortisseur de bruit pour conduit d'écoulement d'air, dans lequel
- des zones spécifiques du conduit d'écoulement d'air porteur du son sont pourvues d'orifices en fente (42, 51) dont la longueur dans la direction d'écoulement et la largeur sont dimensionnées conformément à une taille prédéterminée, et
- sur la base d'une surface prédéterminée des orifices en fente (42, 51), on choisit un rapport entre la longueur (L) et la largeur (W) des orifices en fonction d'une plage spécifique de fréquence d'émission de bruit à amortir,
**caractérisé en ce que**
- les orifices en fente (42) sont pratiqués dans un conduit d'admission (40, 54) de moteur à combustion interne servant de conduit porteur du son dans la zone de courbure (41) et
- un volet refermable (50) est prévu sur le conduit d'admission (54) d'un moteur à combustion interne servant de conduit porteur du son, le volet (50) pouvant être placé par-dessus les orifices en fente (51) pratiqués dans la zone de courbure (52).

2. Amortisseur de bruit selon la revendication 1,
**caractérisé en ce que**
chacun des orifices en fente (42, 51) a une surface d'orifice s'élevant à 320 mm², et sa largeur est établie au choix entre 0,5 mm et 1,7 mm.

3. Amortisseur de bruit selon la revendication 1 ou 2,
**caractérisé en ce que**
le volet refermable (50) est pourvu d'orifices en fente (53).
